Europäisches Patentamt

European Patent Office

Office européen des brevets

(19)

(11) Veröffentlichungsnummer : **0 280 046 B1**

(12) **EUROPÄISCHE PATENTSCHRIFT**

(45) Veröffentlichungstag der Patentschrift :
26.06.91 Patentblatt 91/26

(51) Int. Cl.⁵ : **G21F 7/04**, B25J 21/02

(21) Anmeldenummer : **88101039.1**

(22) Anmeldetag : **25.01.88**

(54) **Handschuhkasten.**

(30) Priorität : **06.02.87 DE 3703691**

(43) Veröffentlichungstag der Anmeldung :
**31.08.88 Patentblatt 88/35**

(45) Bekanntmachung des Hinweises auf die
Patenterteilung :
**26.06.91 Patentblatt 91/26**

(84) Benannte Vertragsstaaten :
**BE DE FR GB**

(56) Entgegenhaltungen :
**EP-A- 0 186 559
CH-A- 151 241
DE-A- 3 107 979
NUCLEAR ENERGY, Band 20, Nr. 4, August
1981, Seiten 303-309, London, GB; J. GRANT et
al.: "Vortex control of safety enclosures"**

(73) Patentinhaber : **Siemens Aktiengesellschaft
Wittelsbacherplatz 2
W-8000 München 2 (DE)**

(72) Erfinder : **Winkler, Horst, Dipl.-Ing.
Unter dem Ringwall 14
W-6465 Biebergemünd (DE)**

## Beschreibung

Die Erfindung betrifft einen Handschuhkasten nach dem Oberbegriff des Patentanspruches 1. Ein derartiger Handschuhkasten ist bereits üblich. Die im Abluftrohr für die Absaugeeinrichtung angebrachte Klappe regelt den Unterdruck im Handschuhkasten. Diese Klappe verschließt in ihrer ersten Endstellung das Rohr für die Absaugeeinrichtung vollständig.

Ist dieser Handschuhkasten an einem anderen, aber mit einem gleich ausgeführten Abfluftrohr versehenen Handschuhkasten über einen offenen Verbindungskanal verbunden, so kann es vorkommen, daß zur Aufrechterhaltung des Unterdrucks in beiden Handschuhkästen nur die Klappe im Abluftrohr für die Absaugeeinrichtung an einem der beiden Handschuhkästen öffnet, während die Klappe im Abluftrohr für die Absaugeinrichtung des anderen Handschuhkastens geschlossen bleibt. Damit ist insbesondere dann zu rechnen, wenn es innerhalb der Handschuhkästen zu Staubentwicklung kommt und sich Staub in den Abluftrohren jeweils vor der Klappe bzw. in diesen Abluftrohren vorgeschalteten Filtern ablagert. Diese Ablagerung kann in den Abluftrohren bei beiden Handschuhkästen verschieden stark sein, so daß die Luft aus beiden Handschuhkästen ausschließlich über das Abluftrohr für die Absaugeeinrichtung eines der beiden Handschuhkästen abgesaugt wird. In diesen Handschuhkasten gelangt die Luft aus dem anderen Handschuhkasten über den Verbindungskanal und verschleppt dadurch in unerwünschter Weise Staub aus einem Handschuhkasten über den Verbindungskanal in den anderen.

Der Erfindung liegt die Aufgabe zugrunde die Abhilfe zu schaffen und Verschleppen von Luft und Staub aus einem Handschuhkasten in den anderen zu vermeiden, wenn diese beiden Hand schuhkästen im Verbund, d.h. mit einem offenem Verbindungskanal betrieben werden.

Zur Lösung dieser Aufgabe hat ein Handschuhkasten der eingangs erwähnten Art erfindungsgemäß die Merkmale des kennzeichnenden Teiles des Patentanspruches 1.

Durch Einstellen des Minimalwertes des Durchtrittsquerschnitts, den die Klappe in den Abluftrohren für die Absaugeeinrichtung beider im Verbund betriebenen Handschuhkästen in ihrer ersten Endstellung offen läßt, wird erreicht, daß die aus jedem der beiden Handschuhkästen abgesaugte Luftmenge auch jeweils durch das Abluftrohr für die Absaugeeinrichtung des betreffenden Handschuhkastens abströmt und daß durch den offenen Verbindungskanal zwischenden beiden Handschuhkästen praktisch kein Luftaustausch stattfindet.

Die Patentansprüche 2 und 3 sind auf vorteilhafte Weiterbildungen des Handschuhkastens gerichtet.

Die Erfindung und ihre Vorteile seien anhand der Zeichnung an einem Ausführungsbeispiel näher erläutert :

FIG 1 zeigt teilweise im Längsschnitt ein Abluftrohr mit einer Klappe in einer ersten Endstellung für eine Absaugeeinrichtung mit zugeordnetem Meßgerät für den Unterdruck eines erfindungsgemäßen Handschuhkastens.

FIG 2 zeigt einen Schnitt entsprechend der strichpunktierten Linie II-II in FIG 1.

FIG 3 zeigt einen Schnitt entsprechend der strichpunktierten Linie III-III in FIG 1, jedoch im Gegensatz zu den Figuren 1 und 2 mit der Klappe im Abluftrohr in der zweiten, offenen Endstellung.

FIG 4 zeigt schematisch zwei erfindungsgemäße Handschuhkästen, die im Verbund betrieben sind.

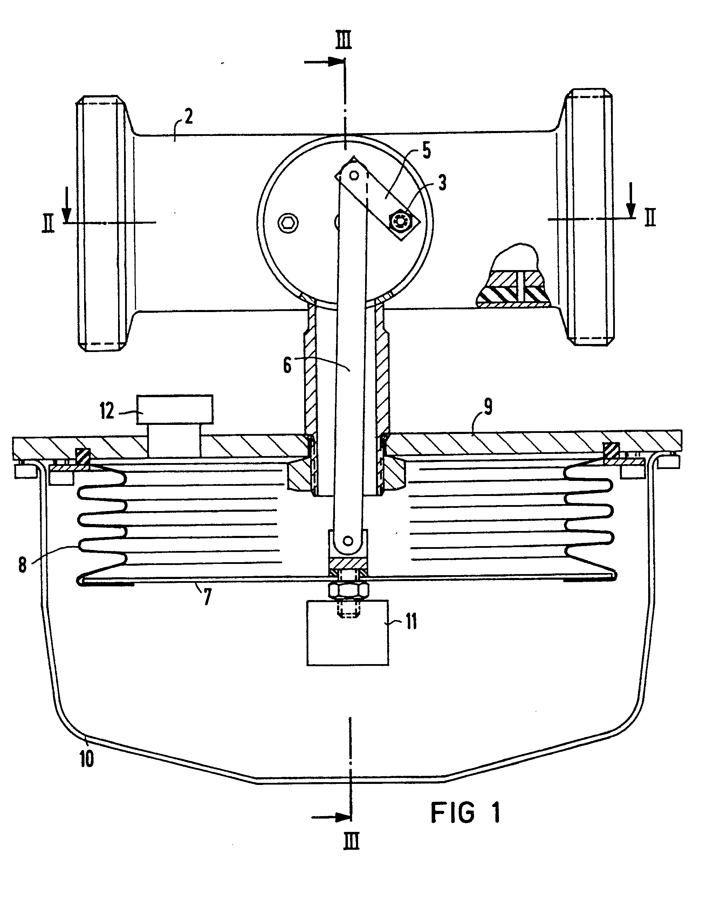

In den Figuren 1 bis 3 ist innerhalb des Abluftrohres 2 für die Absaugeeinrichtung in einem Rohrdurchmesser die Welle 3 einer Klappe 4 gelagert. An der Welle 3 ist ein Hebel 5 starr befestigt, an dem eine Stange 6 mit einem Ende eingehängt ist. Mit dem anderen Ende ist diese Stange 6 an einer Membranplatte 7 eingehängt, die über einen schlauchförmigen Balg 8 an einer am Abluftrohr 2 befestigten Grundplatte 9 hängt. Während der Balg 8 gasdicht an der Membranplatte 7 festgeklebt und gasdicht an der Grundplatte 9 befestigt ist, ist eine die Membranplatte 7 abdeckende Schutzhaube 10 mit Durchführungen versehen und daher luftdurchlässig.

An der Membranplatte 7 hängt ein Justiergewicht 11. Durch die Grundplatte 9 führt ein Anschlußstutzen 12 in den Innenraum des Balgs 8.

Die Klappe 4 ist durch die Membranplatte 7 über die Stange 6 und den Hebel 5 um ihre durch die Welle 3 bestimmte, quer zum Abluftrohr 2 verlaufende Drehachse klappbar. Im Zentrum dieser Klappe 4 befindet sich eine Durchtrittsöffnung 13.

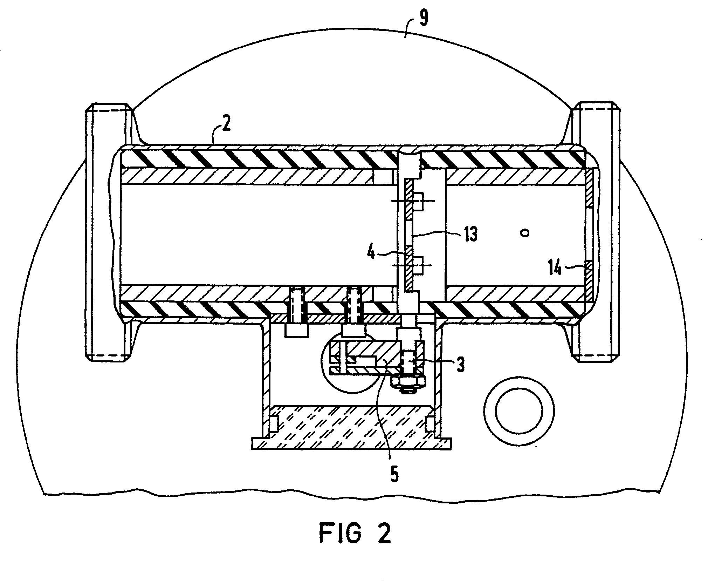

In den Figuren 1 und 2 ist die Klappe 4 in ihrer ersten Endstellung dargestellt, in der sie zwar das Abluftrohr 2 verschließt, aber durch die Durchtrittsöffnung 13 einen eingestellten Minimalwert für den Durchtrittsquerschnitt für Luft durch das Abluftrohr 2 offen läßt. Diese erste Endstellung nimmt die Klappe 4 ein, wenn am Anschlußstutzen 12 ein durch die Auswahl des Justiergewichtes 11 vorgegebener Nennunterdruck herrscht.

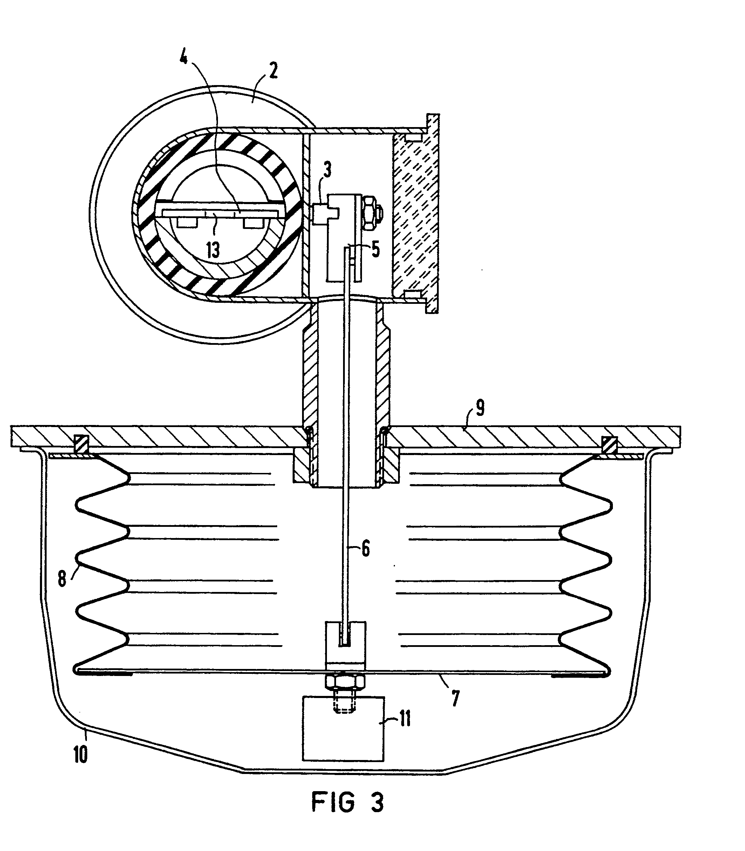

Mit geringer werdendem Unterdruck an dem Anschlußstutzen 12 öffnet die Klappe 4 unter Einwirkung des Justiergewichtes 11 und Dehnung des Balges 8, bis sie sich schließlich in ihrer zweiten Endstellung in einer die Längsachse des Rohres 2 enthaltenden Ebene befindet und einen maximalen Durchtrittsquerschnitt im Abluftrohr 2 freigibt. Diese zweite Endstellung ist in FIG 3 dargestellt.

Dieser maximale Durchtrittsquerschnitt kann durch eine an einem Ende des Abluftrohres 2 angebrachte Blende 14 kleiner als der Innenquerschnitt des Abluftrohres gemacht werden.

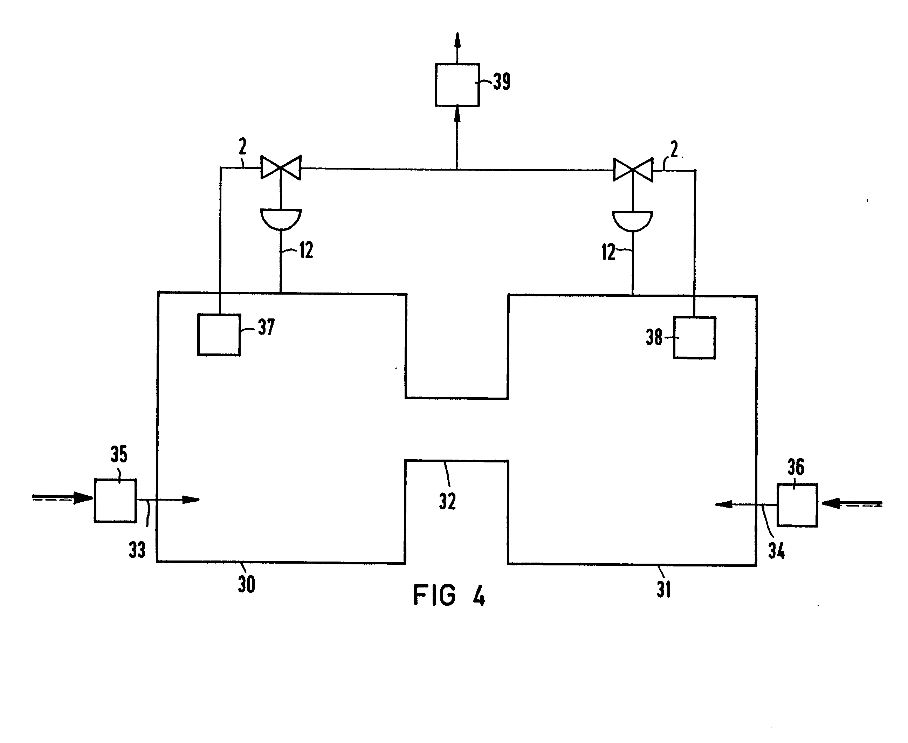

In FIG 4 sind zwei Handschuhkästen 30 und 31 angedeutet, deren Innenräume durch einen offenen Verbindungsschacht 32 kommunizieren. Jeder der beiden Handschuhkästen 30 und 31 weist ein Rohr 33 bzw. 34 für Zuluft mit eingeschaltetem Luftfilter 35 bzw. 36 auf.

Jeder der beiden Handschuhkästen 30 und 31 weist ferner Abluftrohre 2 entsprechend den Figuren 1 bis 3 mit vorgeschalteten Luftfiltern 37 und 38 auf. An diesen Abluftrohren 2 ist eine gemeinsame Absaugeeinrichtung 39 angeschlossen. Die Anschlußstutzen 12 an den Grundplatten 9 der durch die Membranplatte 7 mit dem Balg 8 nach den Figuren 1 bis 3 gebildeten Meßgeräte der Abluftrohre 2 für den Unterdruck, sind jeweils an einem direkt in den jeweiligen Handschuhkasten 30 bzw. 31 führenden Meßstutzen angeschlossen.

Im Normalzustand sind die Klappen 4 in den Abluftrohren 2 beider Handschuhkästen 30 und 31 in der in den Figuren 1 und 2 erkennbaren ersten Endstellung, und die Luft wird aus jedem der beiden Handschuhkästen 30 und 31 durch das zugehörige Abluftrohr 2 und die Durchtrittsöffnung 13 in der zugehörigen Klappe 4 abgesaugt, ohne daß ein Luftaustausch durch den offenen Verbindungsschacht 32 erfolgt.

Tritt eine leichte Verstopfung, beispielsweise des Luftfilters 38 im Handschuhkasten 31 auf, so behalten die Klappen 4 in den Abluftrohren 2 beider Handschuhkästen 30 und 31 ihre in den Figuren 1 und 2 dargestellte erste Endstellung bei. Aus dem Handschuhkasten 30 wird durch die Durchtrittsöffnung 13 der Klappe 4 seines Abluftrohres 2 ein unveränderter Luftstrom abgesaugt, während aus dem Handschuhkasten 31 durch die Durchtrittsöffnung 13 der Klappe 4 des Abluftrohres 2 dieses Handschuhkastens 31 zwar ein etwas verringerter Luftstrom abgesaugt wird. Es wird jedoch noch immer keine Luft aus dem Handschuhkasten 31 durch den Verbindungsschacht 32 hindurch über den Handschuhkasten 30 abgesaugt.

Ist der Filter 38 zu stark verstopft, behält die Klappe 4 im Abluftrohr 2 des Handschuhkastens 31 trotzdem ihre in den Figuren 1 und 2 dargestellte erste Endstellung bei. Durch Messen des aus dem Handschuhkasten 31 durch dessen Abluftrohr 2 abgesaugten Luftvolumenstromes kann jedoch dieser Zustand rechtzeitig festgestellt und der verstopfte Filter 38 ausgetauscht werden.

Bricht aber im Handschuhkasten 31 der Unterdruck z.B. durch Defektwerden eines an einer nicht dargestellten Öffnung dieses Handschuhkastens 31 angebrachten Arbeitshandschuhs völlig zusammen, so nehmen die Klappen 4 in den Abluftrohren 2 beider Handschuhkästen 30 und 31 ihre zweite, offene Endstellung ein, die in FIG 3 dargestellt ist und in der der maximale Durchtrittsquerschnitt für die Abluftrohre 2 beider Handschuhkästen 30 und 31 freigegeben wird. Die Absaugeeinrichtung 39 saugt dann einen höchstmöglichen Luftstrom aus beiden Handschuhkästen 30 und 31 ab, der nicht mehr durch die Zuluftrohre 35 und 36 in diese Handschuhkästen 30 und 31 eintritt, sondern ausschließlich durch den schadhaft gewordenen Arbeitshandschuh am Handschuhkasten 31. Dadurch wird in diesem Schadensfall verhindert, daß Luft, die beispielsweise radioaktiven Staub enthält, aus den Handschuhkästen 30 und 31 in die äußere Umgebung gelangen kann.

## Ansprüche

1. Handschuhkasten mit einem Rohr für Zuluft und einem Abluftrohr für eine Absaugeeinrichtung, in dem sich eine Klappe befindet, die in Steuerabhängigkeit von einem Meßgerät für den Unterdruck im Handschuhkasten steht und die bei sich verringerndem Unterdruck um eine quer verlaufende Drehachse aus einer ersten in eine zweite Endstellung klappbar ist, in der sie einen maximalen Durchtrittsquerschnitt im Abluftrohr freigibt, **dadurch gekennzeichnet,** daß die Klappe (4) derart ausgebildet ist, daß sie in der ersten Endstellung einen Durchtrittsquerschnitt im Abluftrohr (2) offen läßt, der einen eingestellten Minimalwert hat.

2. Handschuhkasten nach Anspruch 1, **dadurch gekennzeichnet,** daß der Durchtrittsquerschnitt in der ersten Endstellung durch eine Durchtrittsöffnung (13) in der Klappe (4) gebildet ist.

3. Handschuhkasten nach Anspruch 1, **dadurch gekennzeichnet,** daß der Durchtrittsquerschnitt in der ersten Endstellung durch einen Durchtrittsspalt zwischen der Klappe (4) und der Innenwand des Abluftrohres (2) gebildet ist.

## Claims

1. A glove box with a pipe for supply air and an exhaust air pipe for a suction device, in which is located a flap, which is dependent for control on a measuring apparatus for the low pressure in the glove box, and which is able to be tilted with reducing low pressure around a transverse extending rotational axis from a first end position into a second end position, in which it clears a maximum through-passage cross-section in the exhaust air pipe, characterised in that the flap (4) is constructed such that it leaves open in the first end position a through-passage cross-section in the exhaust air pipe (2), which has a set minimum value.

2. A glove box according to claim 1, characterised in that the through-passage cross-section is formed in the first end position by a through-passage opening (13) in the flap (4).

3. A glove box according to claim 1,

characterised in that the through-passage cross-section in the first end position is formed by a through-passage gap between the flap (4) and the inner wall of the exhaust air pipe (2).

**Revendications**

1. Boîte à gants ayant un tuyau d'admission de l'air et un tuyau d'évacuation de l'air pour un dispositif d'aspiration, tuyau d'évacuation de l'air dans lequel se trouve un volet qui est commandé par un appareil de mesure de la dépression dans la boîte à gants et qui, lorsque la dépression diminue, peut être rabattu, autour d'un axe de rotation s'étendant transversalement, d'une première à une seconde position d'extrémité dans laquelle il dégage une section transversale maximum de passage dans le tuyau d'évacuation de l'air,
caractérisée, en ce que le volet (4) est constitué de façon à laisser ouverte, dans la première position d'extrémité, une section transversale de passage dans le tuyau d'évacuation de l'air (2) qui a une valeur minimum réglée.

2. Boîte à gants suivant la revendication 1, caractérisée, en ce que la section transversale de passage est formée, en la première position d'extrémité, par un orifice de passage (13) du volet (4).

3. Boîte à gants suivant la revendication 1, caractérisée, en ce que la section transversale de passage, en la première position d'extrémité, est formée par un intervalle de passage entre le volet (4) et la paroi intérieure du tuyau d'évacuation de l'air (2).

FIG 1

FIG 2

FIG 3

EP 0 280 046 B1

FIG 4